# EUROPEAN PATENT APPLICATION

(11) **EP 4 576 668 A1**
(43) Date of publication of application: **25.06.2025**
(21) Application number: 23383354.0
(22) Date of filing: 22.12.2023
(51) Int. Cl.: H04L 9/40, G06N 20/20, H04W 4/70

(54) **COMPUTER IMPLEMENTED METHOD, SYSTEM AND COMPUTER PROGRAM FOR PROACTIVE ANOMALY DETECTION OF IOT DEVICES IN GLOBAL ROAMING**

(71) Applicant: Telefónica Innovación Digital, S.L., 28050 Madrid (ES)
(72) Inventor: Omaña Iglesias, Jesús, 28050 Madrid (ES); Lutu, Andra, 28050 Madrid (ES)
(74) Representative: Carlos Hernando, Borja

(57) **Abstract**

A method, system, and computer programs for proactive anomaly detection of IoT devices in global roaming are proposed. The method comprises: receiving/accessing a dataset including control signaling traffic information of a variety of IoT devices operating worldwide, the dataset including SCCP data; for each IoT device, characterizing its overall behavior by extracting several statistical features from the control signaling traffic information; clustering the IoT devices with similar signaling traffic volume using an unsupervised clustering approach on the extracted statistical features, providing different clusters as a result; and generating a list of anomalous IoT devices by applying an anomaly detection strategy to each cluster. The anomaly detection strategy applies two or more machine learning algorithms on data of each IoT device; compares results obtained by each algorithm; establishes a learned baseline behavior using a result of said comparison; computes an anomaly score for each IoT device; and ranks the IoT devices using the anomaly score.

## Description

### Technical Field

The present invention generally relates to roaming and Internet of Things (IoT) technology. In particular, the invention relates to a computer implemented method, a system, and computer programs for proactive anomaly detection of loT devices in global roaming.

### Background of the Invention

Current operational approaches for anomaly detection in roaming infrastructures tend to be reactive, i.e., operation teams reactively deal with incidents, or act when alarm systems point to predefined severe issues, after the service is already impacted.

In the area of statistical models, several approaches have been proposed in the past [1, 2, 3, 4, 5]. Specifically, when not limiting to the loT or mobile area, approaches like ANOVA, ARIMA, Gaussian Mixture Models (which are also used in this work), Bayesian Models, or Dissimilarity Measures [3] have been well investigated in the past. More recently, studies focusing on network anomalies, and specifically anomalies in the area of loT have appeared [6, 7]. The goal of previous studies in general was the reduction or elimination of human interaction and expert knowledge that is required to deploy existing mechanisms for a specific use case. This is, especially in the quickly changing landscape of loT, a severe issue. To this end, more powerful, machine learning based models have been discussed, including Support Vector Machines, k-means Clustering, k-Nearest Neighbors, Local Outlier Factor Models. Finally, deep learning models like Deep Convolutional Networks, Recurrent Neural Networks, LSTM models and many others have been investigated in the past.

What all previous studies with a focus on network anomalies have in common is their focus on user plane traffic, meaning payload related communication of devices. Furthermore, previous datasets are significantly limited in their scope, ranging from hundreds of datapoints up to a hundred thousand datapoints. In contrast, present invention focuses on anomalies that are captured in the signaling plane (where there is no sensitive data about the loT application) of mobile networks based on a large scale dataset containing the signaling traffic of globally distributed devices. To the best of the author's knowledge, this is the first work investigating a large scale signaling dataset in the area of mobile roaming for anomaly detection.

### References:

[1] Chandola, V., Banerjee, A., and Kumar, V. Anomaly detection: A survey. ACM computing surveys (CSUR) 41, 3 (2009), 1-58.
[2] Eltanbouly, S., Bashendy, M., AINaimi, N., Chkirbene, Z., and Er- bad, A. Machine learning techniques for network anomaly detection: A survey. In 2020 IEEE International Conference on Informatics, loT, and Enabling Technologies (ICIoT) (2020), IEEE, pp. 156-162.
[3] Fahim, M., and Sillitti, A. Anomaly detection, analysis and prediction techniques in loT environment: A systematic literature review. IEEE Access 7 (2019), 81664-81681
[4] Kalinichenko, L., Shanin, I., and Taraban, I. Methods for anomaly detection: A survey. In CEUR workshop proceedings (2014), vol. 1297, p. 2025.
[5] Wang, S., Balarezo, J. F., Kandeepan, S., Al-Hourani, A., Chavez,K. G., and Rubinstein, B. Machine learning in network anomaly detection: A survey. IEEE Access 9 (2021), 152379-152396.
[6] Chatterjee, A., and Ahmed, B. S. lot anomaly detection methods and applications: A survey. Internet of Things 19 (2022), 100568.
[7] Zhang, J. E., Wu, D., and Boulet, B. Time series anomaly detection for smart grids: A survey. In 2021 IEEE Electrical Power and Energy Conference (EPEC) (2021), IEEE, pp. 125-130..

### Description of the Invention

Internet of Things (IoT) applications providers rely on Mobile Network Operators (MNOs) and roaming infrastructures to provide their services world-wide. In this ecosystem where multiple parties are involved, it is hard to guarantee communication availability and reliability. Further, most platforms use a reactive approach to deal with communication issues (i.e., operation teams react when incidents are severe, and the service is often already compromised). Thus, an object of present invention is to provide a solution for a proactive anomaly detection solution for the commercial loT managed connectivity service of a roaming platform to identify communication issues before incidents become critical.

The proposed solution builds on the loT provider's ticketing solution by extracting data, clustering, and modeling using statistical and machine learning techniques based solely on signaling traffic information. The solution is scalable and runs on the engineering team's cloud-based data lake, enabling proactive identification of communication issues before they become critical and compromise the service. This marks a significant departure from reactive approaches that limit the effectiveness of anomaly detection solutions.

According to one aspect, there is provided a computer implemented method for proactive anomaly detection of loT devices in global roaming. The method comprises performing by one or more processors the following steps: receiving or accessing a dataset including control signaling traffic information of a variety of loT devices operating worldwide for multiple loT vertical applications, the dataset including Diameter and Signaling Connection Control Part (SCCP) data of each loT device; for each loT device, characterizing its overall behavior by extracting several statistical features from the control signaling traffic information; clustering the loT devices with similar signaling traffic volume by applying an unsupervised clustering approach to the extracted statistical features, providing different clusters as a result; and generating a list of anomalous loT devices by applying an anomaly detection strategy to each cluster.

Present invention also proposes, according to another aspect, a system for proactive anomaly detection of loT devices in global roaming. The system comprises at least one memory, and at least one processor, which is configured to: receive or access a dataset including control signaling traffic information of a variety of loT devices operating worldwide for multiple loT vertical applications, the dataset including Diameter and Signaling Connection Control Part, SCCP, data of each loT device; for each loT device, characterize its overall behavior by extracting several statistical features from the control signaling traffic information; cluster the loT devices with similar signaling traffic volume by applying an unsupervised clustering approach to the extracted statistical features, providing different clusters as a result; and generate a list of anomalous loT devices by applying an anomaly detection strategy to each cluster.

According to the present invention, the anomaly detection strategy comprises applying two or more machine learning algorithms on data of each loT device; comparing the results obtained by each applied machine learning algorithm; for each loT device, establishing a learned baseline behavior using a result of said comparison; computing an anomaly score for each loT device by comparing new data from the loT device with the established learned baseline behavior; and ranking the loT devices using the computed anomaly score.

In some embodiments, the Diameter and SCCP data include a signaling dialogue start date and time, a duration of the signaling dialogue, a format violation indicator, and a signaling dialogue request type and a result code showing whether the request was successful, or it was rejected.

In some embodiments, the identity of the home operator and of the visited operator are also used. Furthermore, the identity of the core network elements involved in the signaling dialogue can be also used.

In some embodiments, the statistic features comprise a signaling traffic volume, message types and signaling patterns, a device activity, mobility statistics, and/or longitudinal activity statistics.

In some embodiments, the anomaly detection strategy comprises using four machine learning algorithms.

Particularly, the machine learning algorithms comprise a Principal Components Analysis-Gaussian Mixture model algorithm, a Tukey fences algorithm, a variational autoencoder algorithm and/or an Isolation Forest algorithm.

In some embodiments, the anomaly detection strategy is applied on a daily basis.

In some embodiments, the different clusters comprise a cluster with stationary devices with only 2G/3G connectivity, a cluster with stationary devices with only 4G LTE connectivity, a cluster with mildly mobile devices with only 2G/3G connectivity, a cluster with highly mobile devices with mixed 2G/3G/4G LTE connectivity, a cluster with stationary devices with patchy 4G LTE connectivity with 2G/3G.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

### Brief Description of the Drawings

The previous and other advantages and features will be more fully understood from the following detailed description of embodiments, with reference to the attached figures, which must be considered in an illustrative and non-limiting manner, in which:

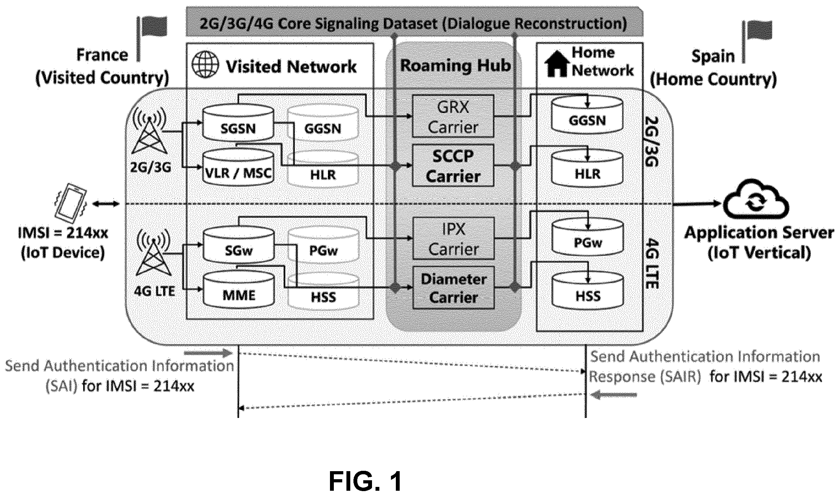

Fig. 1 shows an embodiment of an loT cellular ecosystem and the role of roaming for global loT connectivity. The interfaces that are monitored to build the dataset of signaling traffic (Signaling Connection Control Part (SCCP) and Diameter Carriers for 2G/3G and 4G signaling dialogues, respectively) are shown. In the lower part, an example of 2G/3G signaling dialogue between the deployment location in France (the corresponding visited network) and the core network location in Spain (the corresponding home network) are shown to authenticate the loT device whose SIM is uniquely identifies by International Mobile Subscriber Identity (IMSI) 214xx.
Fig. 2 graphically illustrates an embodiment of the method pipeline. LR stands for learned representation.
Fig. 3 graphically illustrates the steps for using the proposed method in a live setting, according to an embodiment.

### Detailed Description of the invention and of Preferred Embodiments

Support for "things" operating globally has become critical for loT verticals, from connected cars to smart sensors to wearables. IoT verticals deploy their devices worldwide, while keeping operational simplicity in terms of managing the connectivity of their devices and customers. IoT managed connectivity providers (such as Twilio, EMnify, or Truphone) answer these needs by exploiting the roaming functions within the cellular ecosystem. As a result, the communications between loT devices and applications depend on a complex ecosystem composed of multiple network domains, often operated by different organizations. Within this ecosystem, as shown in Fig. 1, the loT logical layer (which deals with the loT applications supported, and their connectivity requirements) and the infrastructure layer (which supports the service of the loT provider) are separated.

On the loT logical layer, loT customers (e.g., car manufacturers, fleet tracking service providers, connected elevator manufacturers) contract managed connectivity from loT providers. These platforms provide their customers connectivity via a set of SIMs that can be installed in loT devices and used globally (also called global SIMs). They also provide management in a centralized manner and other added values services (e.g., security, APIs) for the SIMs provisioned to every customer.

IoT providers do not own the infrastructure layer, but rather contract the global SIMs from one or multiple Mobile Network Operators (MNOs). These MNOs then provide the SIMs' unique identifier, the IMSI. The MNOs are therefore the home networks enabling connectivity via their mobile infrastructure to loT devices operating world-wide. Since most loT verticals deploy devices world-wide (outside the SIMs' home country), MNOs use their roaming agreements to guarantee connectivity to the global SIMs installed in the loT devices. International telco carriers that offer the roaming hub service interconnect the home network with any other visited network, thus increasing the geographical footprint of the loT provides outside the borders of their respective MNOs' home countries.

As part of designing the proposed method, first, several system design questions are particularly addressed before developing the detection engine. For instance, to meet the requirements of a scalable solution and ensure that significant resources are available, particularly, a central anomaly detection solution that can run in the analytics platform operated by the loT provider is designed. To tackle the challenge, present invention relies on a comprehensive, unique dataset that records the control signaling traffic of a variety of loT devices operating worldwide (spanning 40 countries) for multiple loT vertical applications.

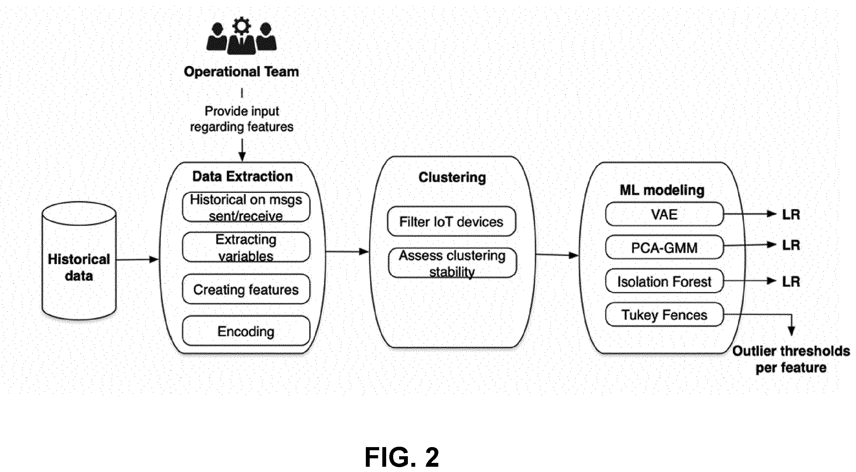

Particularly, present invention proposes an unsupervised method for anomaly detection of loT devices, agnostic to device usage. The key idea is to learn the normal network behavior by estimating a low dimension representation of the signaling messages exchanged by loT devices. The method can be divided in three major phases (see Fig. 2), which are detailed next. First, the raw data is transformed into effective features for the clustering and the anomaly detection algorithms. This includes the cleaning and encoding of the data (see the "Creating Features" block in Fig. 2).

The proposed method then proceeds to cluster the loT devices using overall statistics, for instance, on the number of daily signaling dialogues, protocol usage, and mobility features. It has been noticed that sub-groups of devices have very different signaling patterns. Given that the dataset is agnostic to the device purpose (i.e., the loT vertical application), present invention proposes an unsupervised clustering approach for uncovering the signaling patterns within the dataset. This step is crucial for obtaining a good performance model: if the model is trained with all devices, it would detect the minority class of devices as anomalies because of its different patterns. For example, if signaling logs from many sensors (small amount of signaling logs, massive number of stationary devices) and few connected cars (larger volume of signaling traffic due to mobility) are merged, then an anomaly detection model would commonly detect the connected cars as anomalies.

Subsequently, for each cluster, a plurality of machine learning algorithms can be used. Particularly, in the embodiment of Fig. 2, four anomaly detection algorithms/models are applied to be compared among them (see "ML Modeling" block in Fig. 2), comprising the PCA-GMM and Tukey fences, which is particularly used as baseline, and two more advance solutions, namely, Variational Autoencoder (VAE) and Isolation Forest.

Then, at inference stage, the method computes an anomaly score for each of the loT devices by comparing new representations (i.e. new data from the devices in the clusters) to the learned one (i.e. the learned baseline behavior obtained by the above-mentioned algorithms). This offers the opportunity to detect anomalies caused by different unknown reasons, indistinct to the device's purpose and without requiring any labeled data.

Following the different stages in which the proposed method can be divided are detailed.

### Feature Engineering

Feature engineering is done to transform raw data into effective features for anomaly detection. The raw dataset includes raw Diameter and MAP dialogues from a sample of a large number of loT devices operating world-wide (approximately four million). The dialogues follow the official protocol specifications. The domain knowledge of the loT Provider operations team is used to define the per-dialogue protocol fields that best serve the anomaly detection task. The fields considered include for each SIM the dialogue start date and time, its duration, a format violation indicator (to help eliminate malformed dialogues), the dialogue request type (the operation code such as Send Authentication Information Request (SAIR), or UL request) and the result code (showing whether the request was successful, or it was rejected). The identity of the home and visited operators, and (where available) the identity of the core network elements involved in the signaling dialogue are also checked.

In some embodiments, a total of 95 features including overall statistics on i) signaling traffic volume, ii) message types and signaling patterns, iii) device activity, iv) mobility statistics, and v) longitudinal activity statistics, are included. The features cover different levels and directions to describe devices as holistically as possible from the point of view of the signaling protocols that are monitored. For all features, present invention considers a period of time of interest (one month, for example), extracts the timeseries of all records for each loT device per day and compute the statistical features. The objective is to characterize the overall loT device behavior, and avoid sudden changes and anomalies that may occur on short timescales

**Table 1. Example of features to be used for clustering and for anomaly detection models.**

| Feature Name | Description | Feature Set and Relationship to other features |
|---|---|---|
| n | Total number of signaling dialogues (both MAP and Diameter). | A signaling dialogues represents the complete sequence of all requests and responses involved in a particular signaling interaction between the visited and the home network of the loT device. |
| n_map_success | Total number of *successful* MAP signaling dialogues. | A successful MAP dialog represents a sequence of signaling messages that results in a successful result for the loT device. |
| n_diam_success | Total number of *successful* Diameter signaling dialogues. | A successful Diameter dialog represents a sequence of signaling messages that results in a successful result for the loT device. |
| n_operator_changes | Number of visited operator changes that we observe from the daily feed of MAP dialogues. | We use this feature as a signal for device mobility; it should correlate with n_sgsn_unique and n_vlr_unique. |
| mean_iat_in_session | Average inter-arrival time between dialogues *within* a session, calculated over all the session we identify during a day. | A session captures the sequence of the signaling dialogues (both MAP or Diameter) that have a max inter-arrival time below 30s. |
| mean_iat_session | Average inter-arrival time *between* different sessions, calculated for all the session we identify during a day. | A session captures the sequence of the signaling dialogues (both MAP or Diameter) that have a max inter-arrival time below 30s. |

### Clustering:

The division of managed loT connectivity service across different domains within the mobile ecosystem, namely, the visited MNO that owns the local radio network, the loT vertical that uses the radio resource, but depends on a different core network that the loT provider offers, and the roaming hub that interconnects the prior two entities, makes network management, device-level monitoring and anomaly detection a challenging, still unsolved problem. Given present invention's goal to build a solution agnostic to the loT vertical application using the managed connectivity service, present invention implements an unsupervised clustering approach to group loT devices with similar traffic volumes before ingesting them into the anomaly detection pipeline.

Particularly, present invention uses overall statistics (for example, the average over the period of one month) on the number of daily signaling dialogues, protocol usage, and mobility features for clustering. These features enables distinguishing between loT devices serving applications that generate high or low volume of signaling, loT devices connecting using 2G/3G or 4G LTE, and stationary or mobile loT devices, which gives enough information to divide them in different types of clusters.

### Anomaly Detection Models

As said before, different machine learning algorithms can be used, and in a particular embodiment, the invention uses the PCA-GMM, Isolation Forest, VAE, and Tukey fences. The unsupervised approach is selected based on the fact that anomalies are, generally, un-known events that are not feasible to train a detection model in a supervised manner.

With regard to Tukey Fences, this algorithm can be also called the box plot rule. It is a simple rule in which the lower quartile (Q1) and the upper quartile (Q3) are considered the *lower*h*inge* and *upper*h*inge* respectively, and the difference between the hinges, namely the interquartile range (IQR), is denoted as *Hspread.* Given these variables, two fences are calculated. Any data point beyond those two fence values is considered an anomalous point. This method is particularly useful for visualizing such anomalies in big data.

With regard to PCA-GMM, in this model, the features are first transformed into a lowerdimensional representation using PCA, with the aim of retaining as much of the original variance as possible. The reduced data is then clustered using Gaussian Mixture Models (GMM), with the number of components in the mixture determined by the Bayesian Information Criterion (BIC). GMM assumes that regular data is generated from a mixture of Gaussian distributions with unknown parameters. The parameters of the distributions are fit using the expectation-maximization algorithm which maximizes the likelihood of the data points. In some embodiments, present invention assigns to each data point a probability of being generated by the distribution, if the probability is very low that is an indication of being an anomaly.

With regard to Isolation Forest, the idea behind this algorithm is to isolate the anomalies in a dataset by creating a random forest of isolation trees. An isolation tree is a binary tree that recursively splits the nodes into smaller subsets. The splitting process is based on a randomly selected feature and a randomly selected split value for that feature. The path length from the root node to the terminal node where an instance is isolated is used to calculate an anomaly score. The anomaly score is a number between 0 and 1, and it represents the degree of anomaly of an instance. The closer the score is to 1, the more anomalous the instance is considered to be. The average path length of the trees in the forest is used to determine the threshold value for anomaly detection. The most important parameter in Isolation Forest is called contamination, which is the fraction of the dataset that contains abnormal instances. Present invention, in some embodiments, sets this value to 0.1, taking into consideration the size of the operations team, who would need to verify the validity of the anomalies.

Finally, with regard to VAE, this consists of two sub-networks, namely an encoder and a decoder. This architecture uses a bottleneck to learn a low-dimensional representation space z of the training data *x* . The encoder learns the mapping of the input data *x* into a prior distribution *p* (*z*), which is usually a standardGaussian(*z* ~ *N*(0,*I*)).The last layer of the encoder outputs the parameters *µx,σx* of the distribution *q*(*z*|*x*).The decoder network is used to reconstruct *x̂* ~ *p* (*x*|*z*) from the latent representation z sampled from *N* (*µx* , *σx* ). In contrast with the GMM, this model does not make the assumption that data comes from a Gaussian distribution, but it learns the transformation of the data distribution into a Gaussian.

In some embodiments, present invention implements a fully connected (FC)-VAE in which both encoder and decoder networks are composed of 4 fully connected layers with ReLU activation functions. The encoder reduces the number of features up to z=9 (91 × 64 × 32 × 9) while the decoder does the reverse process, increasing the number of features at each layer (9 × 32 × 64 × 91).

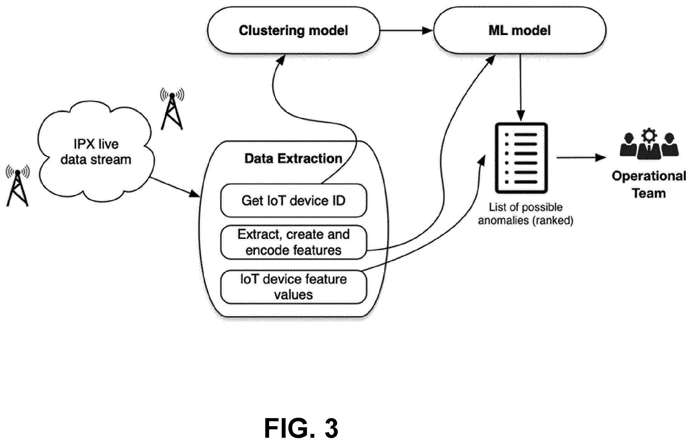

With reference now to Fig. 3, therein the steps for using the models created in the previous sections in a live setting are shown. Namely, as the data for the different roaming hubs is centralized in a data lake, present invention can schedule a daily data extraction in order to get the features that will later be used by the clustering and the anomaly detection models. The clustering algorithm will decide to which cluster a particular loT device belongs, afterwards, present invention will use the different machine learning models for a given cluster in create a ranking that indicates how abnormal (i.e. different for the most common devices present in that cluster) that loT device is behaving. In some embodiments, this will be performed daily for each algorithm and each cluster on the data of a given day. This phase generates a list of possible anomalous loT devices, with their corresponding anomaly score together with the feature values for such loT devices. This is, then, the input for the operational team to assess.

A particular use case of the proposed method is detailed below, in which the proposed solution was implemented on top of an analytics platform of an loT provider.

In this particular case, the data collection and feature extraction involved the collection of signaling traffic information from a geo-redundant signaling network in four sampling locations, two located in Europe and two in North America. Present invention first reconstructs the signaling dialogues (between the home and the visited core networks), and collects the results every certain period of time (e.g. every five minutes) in a data lake. On top of the data lake, the engineering team leverages a commercial solution to build analytics and Machine Learning/Deep Learning pipeline. Present invention leverages the analytics platform to deploy the proposed pipeline for anomaly detection.

The signaling traffic information corresponding to a large sample of loT devices the loT provider manages at its mobile core ingress was captures, and each loT device was identified via its unique identifier (i.e., the encrypted IMSI). The traffic corresponding to two signaling services, namely SCCP signaling (for 2G/3G connectivity) and Diameter signaling (for 4G LTE connectivity) was also captured.

Specifically, the dataset was collected during September-October 2022, and contains signaling data corresponding to a sample of approximately 4 million loT devices from various loT vertical application that the loT customers support. In total, the dataset contains more than 5 billion signaling interactions that can be analyzed using Apache Spark. Note that each such interaction called a dialogue, consists of one or multiple request-response pairs.

Considering SCCP signaling (for 2G/3G connectivity), present invention monitors the MAP protocol that supports end-user mobility and allows network elements (e.g., the Home Location Registry (HLR), Visited Location Registry (VLR), Serving GPRS Support Node (SGSN), Mobile-services Switching Centre (MSC)) to communicate. Present invention can collect traffic corresponding to the procedures of each loT device: i) authentication and security (Send Authentication Information), and ii) location management (Update Location, Cancel Location). For 4G LTE connectivity, present invention monitors the Diameter protocol that provides a similar functionality to SCCP. Present invention collects signaling dialogues corresponding to the same procedures mentioned above for SCCP.

For validation purposes, present invention build the dataset by analyzing the tickets triggered during October 2022, and identifying the affected loT devices (i.e., via their associated IMSIs) and the duration of the anomaly. For this exercise, the present invention focused on an loT customer serving different final end-users (including, for example, entertainment systems, emergency phone connections, security monitoring). Present invention can select anomalies with medium, high or critical impact that affected thousands of loT devices within different countries (for instance, Spain, India, and Saudi Arabia). The validation ground-truth dataset in this case consists of signaling data from October 5th, 6th, 20th, 25th, 26th, 27th, 28th, and 29th, as reported by the loT customer. In this period there were, on average, more than 2.9 million daily active devices.

With regard to the clustering phase, the number of clusters were selected based on homogeneity and volume, to avoid very specific clusters with few devices. Namely, present invention can rely on the BIC to select the optimal number of clusters. Table 2 gives an overview of the clusters that were identified (in this case 5), and their main characteristics. The following five patterns emerge:
- Cluster 1: mostly stationary loT devices, 2G/3G connectivity only, very low volume of dialogues
- Cluster 2: stationary loT devices, 4G LTE connectivity only, medium volume of dialogues
- Cluster 3: mildly mobile loT devices, 2G/3G connectivity, high volume of dialogues
- Cluster 4: highly mobile loT devices, mixed 2G/3G/4G LTE connectivity, very high volume of dialogues
- Cluster 5: mostly stationary loT devices, patchy 4G LTE connectivity (with 2G/3G), high volume of dialogues.

**Table 2. Mean values for features that distinguish clusters.**

| Device Cluster | 1 | 2 | 3 | 4 | 5 |
|---|---|---|---|---|---|
| Overall Statistics: Protocol Usage and Devices | | | | | |
| # Devices | 1.7M | 420k | 894k | 300k | 621k |
| # Dialogues per device/day | 8.7 | 22.4 | 98.4 | 1300 | 72 |
| MAP Dialogues (2G/3G) [%] | 100 | 0 | 99.99 | 63.4 | 18.1 |
| Diameter Dialogues (LTE) [%] | 0 | 100 | 0.01 | 36.6 | 81.9 |

| Dialogue Type Volume | | | | | |
|---|---|---|---|---|---|
| #SAI (2G/3G) | 4.2 | 0 | 46.4 | 306 | 2.1 |
| #SAI (LTE) | 0 | 15 | 0.01 | 291 | 43 |
| #UL (2G/3G) | 1.2 | 0 | 18,5 | 145.5 | 1.1 |
| #UL (LTE) | 0 | 4.4 | 0.001 | 244 | 12.7 |
| #CL (2G/3G) | 1.7 | 0 | 21.6 | 117.1 | 1.6 |
| #CL (LTE) | 0 | 1.2 | 0.001 | 102.1 | 6.5 |

| Mobil lity Feat ures | | | | | |
|---|---|---|---|---|---|
| LTE Operator Changes | 0 | 0 | 0 | 25 | 1.6 |
| VLR Changes | 2.2 | 0 | 36.3 | 278 | 1.12 |
| SGSN Changes | 1.51 | 0 | 20.5 | 103.8 | 1 |

With regard to the machine learning models to detect anomalies, in this specific use case, three countries, from different continents, were selected. Present invention verified the ranking of loT devices with incidents in the output of the model. Recall that the ranking reflects the deviation from the "normal" behavior, and the higher a loT device is in the rank, the higher is the probability of that loT device having anomalous behavior (i.e., deviation from its previously learned patterns).

Instead of presenting results per day (since the anomaly could last longer than a day), the results in this case are presented by country. Moreover, the present invention can analyze the performance of the model for each cluster and each model. Specifically, it verifies with the operation teams the percentage of anomalous loT devices that can be detected in these three countries, given three known anomalous incidents. The evaluation results are shown in Table 3.

**Table 3. Percentage of anomalous loT devices classified as anomalous and present in tickets**

| **Model/Country** | **Spain** | | | | | **India** | | | | | **Saudi Arabia** | | | | |
|---|---|---|---|---|---|---|---|---|---|---|---|---|---|---|---|
| | *c1* | *c2* | *c3* | *c4* | *c5* | *c1* | *c2* | *c3* | *c4* | *c5* | *c1* | *c2* | *c3* | *c4* | *c5* |
| Isolation Forest | NA | 11.2% | NA | 0.0% | 0.0% | NA | 4.6% | NA | 7.9% | 12.5% | NA | 41.7% | NA | 0.0% | 0.0% |
| **FC-VAE** | NA | 46.7% | NA | 0.0% | 0.0% | NA | 31.7% | NA | 13.4% | 4.7% | NA | 56.1% | NA | 50.0% | 33.4% |
| **GMM** | NA | 0.0% | NA | 0.0% | 0.0% | NA | 8.2% | NA | 0.7% | 1.2% | NA | 46.7% | NA | 50.0% | 33.4% |
| **Tukey Fences** | NA | 2.5% | NA | 0.0% | 0.0% | NA | 3.1% | NA | 0.3% | 0.4% | NA | 0.2% | NA | 0.0% | 0.0% |

From the above results, it can be seen that the loT devices with anomalies map to clusters c2, c4 and c5, with the vast majority (in the order of thousands of devices) falling in c2 (i.e., loT devices that are mostly stationary, with 4G LTE connectivity only, and medium volume of dialogues). For cluster c4, the lowest number of anomalous loT devices mapped, with as little as two loT devices in Spain or Saudi Arabia, is had. The distribution is similar for cluster c5, with the exception of India, where the number of loT devices with ground-truth anomalies is roughly half of those in c2 (in the order of thousands).

Overall, the FC-VAE model gives the best performance on cluster c2, triggering alarms for a significant percentage of the affected loT devices (according to the ground truth dataset). Depending on the location of the anomalous loT devices, FC-VAE succeeds in triggering anomaly alarms for more than 30% of devices in India, 45% of devices in Spain, and more than 55% of devices in Saudi Arabia. This is significant, given that a high rate of alarms per loT customer is an important signal for the operations team to verify the client's connectivity status. As previously mentioned, for the other clusters a very limited number of ground-truth anomalies (less than ten) to detect is had, while the cluster size is significant. Thus, with approximately 3M active devices during the testing days (from which it was needed to detect anomalous devices that in some cases were less than ten per cluster) the fact that 0% (which is in the case for Spain, where there were approximately 10 anomalies only in c4 or c5) is reported is quite expected.

Present invention allows for:
- Proactive detection of anomalies for different loT verticals.
- Cloud-based solution that scales with the number of loT devices.
- Generality to other loT providers since it uses signaling data, which is standard since they need to follow a standardized communication protocol.
- Generality for connectivity technology. In the embodiment, it has been showcased how to use the solution for two different connectivity solutions SCCP (for 2G/3G. connectivity) and Diameter (4G LTE connectivity). Similar features, such as the one described in Table 1 could be created for other connectivity technologies.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

## Claims

1. A computer implemented method for proactive anomaly detection of loT devices in global roaming, the method comprising performing by at least one processor the following steps:
receiving or accessing a dataset including control signaling traffic information of a variety of loT devices operating worldwide for multiple loT vertical applications, the dataset including Diameter and Signaling Connection Control Part, SCCP, data of each loT device;
for each loT device, characterizing its overall behavior by extracting several statistical features from the control signaling traffic information;
clustering the loT devices with similar signaling traffic volume by applying an unsupervised clustering approach to the extracted statistical features, providing different clusters as a result; and
generating a list of anomalous loT devices by applying an anomaly detection strategy to each cluster, the anomaly detection strategy comprising:
applying two or more machine learning algorithms on data of each loT device;
comparing results obtained by each applied machine learning algorithm;
for each loT device, establishing a learned baseline behavior using a result of said comparison;
computing an anomaly score for each loT device by comparing new data from the loT device with the established learned baseline behavior; and
ranking the loT devices using the computed anomaly score.

2. The method of claim 1, wherein the Diameter and SCCP data include a signaling dialogue start date and time, a duration of the signaling dialogue, a format violation indicator, and a signaling dialogue request type and a result code showing whether the request was successful, or it was rejected.

3. The method of claim 2, further comprising an identity of a home operator and of a visited operator, and optionally an identity of core network elements involved in the signaling dialogue.

4. The method of any one of the previous claims, wherein the statistic features comprise a signaling traffic volume, message types and signaling patterns, a device activity, mobility statistics, and/or longitudinal activity statistics.

5. The method of any one of the previous claims, wherein the anomaly detection strategy comprises using four machine learning algorithms.

6. The method of any one of the previous claims, wherein the machine learning algorithms comprise a Principal Components Analysis-Gaussian Mixture model algorithm, a Tukey fences algorithm, a variational autoencoder algorithm and/or an Isolation Forest algorithm.

7. The method of any one of the previous claims, wherein the different clusters comprise a cluster with stationary devices with only 2G/3G connectivity, a cluster with stationary devices with only 4G LTE connectivity, a cluster with mildly mobile devices with only 2G/3G connectivity, a cluster with highly mobile devices with mixed 2G/3G/4G LTE connectivity, a cluster with stationary devices with patchy 4G LTE connectivity with 2G/3G.

8. The method of any one of the previous claims, wherein the anomaly detection strategy is applied on a daily basis.

9. A system for proactive anomaly detection of loT devices in global roaming, the system comprising:
a memory;
at least one processor, configured to:
receive or access a dataset including control signaling traffic information of a variety of loT devices operating worldwide for multiple loT vertical applications, the dataset including Diameter and Signaling Connection Control Part, SCCP, data of each loT device;
for each loT device, characterize its overall behavior by extracting several statistical features from the control signaling traffic information;
cluster the loT devices with similar signaling traffic volume by applying an unsupervised clustering approach to the extracted statistical features, providing different clusters as a result; and
generate a list of anomalous loT devices by applying an anomaly detection strategy to each cluster, the anomaly detection strategy comprising:
applying two or more machine learning algorithms on data of each loT device;
comparing results obtained by each applied machine learning algorithm;
for each loT device, establishing a learned baseline behavior using a result of said comparison;
computing an anomaly score for each loT device by comparing new data from the loT device with the established learned baseline behavior; and
ranking the loT devices using the computed anomaly score.

10. The system of claim 9, wherein the Diameter and SCCP data include a signaling dialogue start date and time, a duration of the signaling dialogue, a format violation indicator, and a signaling dialogue request type and a result code showing whether the request was successful, or it was rejected.

11. The system of claim 9 or 10, further comprising an identity of a home operator and of a visited operator, and optionally an identity of core network elements involved in the signaling dialogue.

12. The system of claim 9, 10 or 11, wherein the statistic features comprise a signaling traffic volume, message types and signaling patterns, a device activity, mobility statistics, and/or longitudinal activity statistics.

13. The system of any one of the previous claims 9-12, wherein the anomaly detection strategy comprises using four machine learning algorithms.

14. The system of any one of the previous claims 9-13, wherein the machine learning algorithms comprise a Principal Components Analysis-Gaussian Mixture model algorithm, a Tukey fences algorithm, a variational autoencoder algorithm and/or an Isolation Forest algorithm.

15. A non-transitory computer readable medium comprising code instructions that when executed by at least one processor of a computing device implement the method of any of claims 1 to 8.
